# EUROPEAN PATENT SPECIFICATION

(11) **EP 1 693 996 B1**
(45) Date of publication and mention of the grant of the patent: **23.05.2007**
(21) Application number: 06250725.6
(22) Date of filing: 10.02.2006
(51) Int. Cl.: H04L 12/46, H04L 29/12

(54) **Automatic discovery of psuedo-wire peer addresses in ethernet-based networks**
Automatische Erkennung von Pseudo-Wire Peer-Adressen in Ethernet-basierten Netzen
Découverte automatique des adresses d'homologues pseudo-wire dans des réseaux Ethernet

(30) Priority: 17.02.2005 US 61275
(43) Date of publication of application: 23.08.2006
(73) Proprietor: LUCENT TECHNOLOGIES INC., Murray Hill, New Jersey 07974-0636 (US)
(72) Inventor: Shih-Chang, Liang, Rockville Maryland 20852 (US); Wenko, Lin, Phoenix Arizona 85045 (US)
(74) Representative: Sarup, David Alexander

(56) References cited:
- US-A1- 2004 133 619
- US-A1- 2004 174 887
- US-B1- 6 618 377
- PRAYSON PATE ET AL: "Framework for Pseudo Wire Emulation Edge-to-Edge (PWE3); draft-pate-pwe3-framework-02.txt;" IETF STANDARD-WORKING-DRAFT, INTERNET ENGINEERING TASK FORCE, IETF, CH, no. 2, 1 January 1900 (1900-01-01), XP015033777 ISSN: 0000-0004

## Description

### Field of the Invention

The present invention generally relates to service emulation over a network, and more particularly relates to an automatic mechanism for Pseudo-Wire (PW) peers to exchange address information to support PW services over Ethernet-based networks.

### Background

Pseudo Wire Emulation Edge-to-Edge (PWE3) has been described as a mechanism for emulating the essential attributes of a service such as ATM, Frame Relay, or Ethernet, over a Packet Switched Network (PSN). The required functions of PWs include encapsulating service-specific Protocol Data Units (PDUs) arriving at an ingress port, and carrying them across a path, or tunnel, managing their timing and order, and any other operations required to emulate the behavior and characteristics of the service as faithfully as possible. To an outside observer, the PW is perceived as an unshared link, or circuit, of the chosen service.

In the Pseudo Wire Emulation Edge-to-Edge architecture, the pseudo wires between peers are used to emulate popular services such as, for example, ATM, Frame Relay, Ethernet, and TDM services, over packet switched networks. Addressing information at various layers of the peer entities needs to be exchanged among the peers, before the PW peers can communicate with the essential elements of the emulated services. For example, a peer entity can be identified by a protocol address such as IP, or by a MAC address, depending on the type and nature of the network that provides the emulation.

There are many types of transport technologies in currently deployed telecommunications networks. Some of these are circuit based, while others are frame/packet based. Frame/packet based technologies have become widely available and bandwidth efficient. Partly as a consequence of the availability and efficiency of the frame/packet based technologies, there is a strong demand from TDM based service providers for the capability to transport TDM based traffic over frame/packet based networks.

The Pseudo Wire Emulation Edge-to-Edge working group of the Internet Engineering Task Force (IETF) has proposed the concept of PW for the transportation of TDM links (e.g., E1, T1 and above) over frame/packet based networks to meet this demand. However, the PW addressing method, and the PW provisioning procedures have not been defined, especially when protection switching requirements are taken into consideration. A consistent and intuitive addressing scheme is desirable for PW service planning. Further, a simple and automatic PW provisioning procedure is desirable for PW service delivery.

What is needed are mechanisms for PW peers to exchange information in order to support PW service over Ethernet-based networks.

### Summary of the invention

A method according to the present invention is set out in the independent claim 1, to which the reader is now referred. Preferred features are laid out in the dependent claims.

Briefly, methods in accordance with the present invention provide Pseudo-Wire peer address discovery in a network environment. More particularly, methods are provided for PW peers to exchange information in order to support PW service over Ethernet-based networks. When a PW peer recognizes that one or more MAC addresses associated with the far end of the PW are not known, an address request packet is prepared and broadcast from each MAC address associated with that PW peer. An address response packet is generated by the far end peer, for each of its associated MAC addresses, and unicast in response to each of the MAC addresses from which an address request packet was sent.

In a further aspect of the present invention, at nodes having two or more MAC addresses associated with the PW, one MAC address is designated as the primary address based upon the value of the local PW identifier, or protocol address.

### Brief Description of the Drawings

Fig. 1 illustrates the operations of PW peer address discovery when there are two ports at each end.
Fig. 2 is a flow diagram illustrating a method of address discovery over Ethernet for a Pseudo-Wire (PW) emulation.
Fig. 3 is a flow diagram illustrating a method of obtaining a physical address for a target end of a pseudo-wire.

### Detailed Description

Generally, embodiments of the present invention provide an automatic PW peer discovery mechanism for Ethernet-based networks within a Pseudo-Wire Emulation Edge-to-Edge architecture. The address discovery procedure includes the PW management entities exchanging physical addresses (e.g., MAC addresses for Ethernet-based networks) without the need for operator intervention. Additionally, when a PW peer is supported by multiple physical addresses, priority can also be determined for protection purposes.

Reference herein to "one embodiment", "an embodiment", or similar formulations, means that a particular feature, structure, operation, or characteristic described in connection with the embodiment, is included in at least one embodiment of the present invention. Thus, the appearances of such phrases or formulations herein are not necessarily all referring to the same embodiment. Furthermore, various particular features, structures, operations, or characteristics may be combined in any suitable manner in one or more embodiments.

### Terminology

Some terminology used in connection with the PWE3 architecture includes various terms and expressions presented below.

Attachment Circuit (AC) refers to a physical or virtual circuit attaching a Customer Edge to a Provider Edge (PE). An AC can be a Frame Relay DLCI, an ATM VPI/VCI, an Ethernet port, a VLAN, an HDLC link, a PPP connection on a physical interface, a PPP session from an L2TP tunnel, an MPLS LSP, and so on.

Customer Edge (CE) refers to a device where one end of a service originates and/or terminates. The CE is not aware that it is using an emulated service rather than a native service.

Packet Switched Network (PSN), as used herein, refers to a network using Ethernet, IP or MPLS as the mechanism for packet forwarding.

Provider Edge (PE) refers to a device that provides PWE3 to a CE.

Pseudo Wire (PW) refers to a mechanism that carries the essential elements of an emulated circuit from one PE to another PE over a PSN.

Pseudo Wire Emulation Edge to Edge refers to a mechanism that emulates the essential attributes of a service (such as a T1 leased line or Frame Relay) over a PSN.

Pseudo Wire PDU refers to a Protocol Data Unit (PDU) sent on the PW that contains all of the data and control information necessary to emulate the desired service.

The Address Resolution Protocol (ARP) is an existing protocol that can be used by an end station to determine the physical address of another station on the same LAN. It is noted however, that there are many uses of the Address Resolution Protocol for both standard and proprietary functionalities. Each of these functionalities utilizes a registered Protocol Type assigned by the Internet Assigned Numbers Authority (IANA). Similarly, various embodiments of the present invention that incorporate ARP, utilize such a dedicated Protocol Type. These embodiments of the present invention take advantage of an existing protocol (ARP) and automate the PW provisioning procedure without modifying that protocol. It will be appreciated that the present invention is not limited to use of ARP for determination of physical addresses, and that any suitable hardware, software, or combination of hardware and software for determining physical addresses may be used in alternative embodiments of the present invention.

Without the benefit of the present invention, system operators may be required to manually maintain a system-wide database for the MAC address of each port that a PW may or may not use, and such a database will have to contain the physical port operation status that needs to be updated in near real-time to make the use of such a database practical. Further, system operators may need to decide what the local physical port and the remote physical port to serve the PW before the PW service can be provisioned. Still further, system operators may need to manually enter the physical address at both ends of the PW to provision the PW.

As will be appreciated, source and destination MAC addresses are fields within an Ethernet frame. More particularly, the destination MAC address field identifies the station(s) that are to receive an Ethernet frame, whereas the source MAC address identifies the station at which the frame originated. Although the IEEE 802.3 standard permits these address fields to be either 2-bytes or 6-bytes in length typical Ethernet implementations use 6-byte addresses.

In an illustrative embodiment of the present invention, the PW addressing scheme includes a unique 20-bit PW Identifier (PW ID) within a single broadcasting domain of either physical or virtual bridged Ethernet LAN, which represents a PW endpoint to its peer. Within the domain, the value of a PW ID can be provisioned to a set of a combination of Ethernet MAC addresses and optional VLAN ID through which the PW endpoint is reached. As explained in greater detail below, the PW ID is also carried in a broadcast request and corresponding unicast response (e.g., an ARP request/response message). It is noted that the present invention is limited to implementations with any particular bit-length for the PW ID.

Various embodiments of the present invention provide an automatic PW peer address discovery procedure that includes the use of broadcast requests for address information. It is noted that Ethernet endpoints support the ARP protocol. Some embodiments of the present invention extend, or modify, the ARP protocol, beyond IP applications, in order to discover the PW peers. ARP, which is defined in IETF RFC 826 (1982 version, available from the IETF RFC web page), provides a generic mechanism to work with various network topologies and with various upper layer protocols. ARP is often used where the network is based on Ethernet and the upper layer protocol is IP. However, it will be appreciated that for a PW application that adapts ARP packets for the peer address discovery procedure, the network itself continues to be based on Ethernet, while the upper layers become the PW application.

When a PW instance is provisioned at a local node with the assigned PW ID and optional VLAN, the instance attempts to communicate with targeted peers in order to determine the physical address(es) that should be used to service the PW. The discovery procedure in accordance with the present invention is initiated when the peer-to-peer transport service is requested by the PW application layer, but the physical address of the target is unknown or has expired. Those skilled in the art will appreciate that there may be differences in setting ARP cache time-outs for MAC addresses and for cache (i.e., local table memory) size, when using a PW application as opposed to an IP application, because of the different characteristics of PW and IP applications. Typically, the type of service emulated by the PW is not as dynamic as IP. As Ethernet users, both PW and IP are different in several ways. For example, the number of IP users on each Ethernet host is typically one, whereas the PW users on each Ethernet host will be many, if not thousands. Additionally, the sessions for each IP user are usually bursty and short, whereas the sessions for PW usually last for days, or substantially longer. In view of these different characteristics, it is clear that retention records for IP->MAC serve a different purpose than that of PW->MAC.

In one embodiment, an aging scheme for PW->MAC records is not used at all. Rather, PW->MAC records are removed when the PW is removed, or alternatively it is subsequently ignored. When the PW is to be established, ARP is always initiated without consulting the previous PW->MAC record. In this way, records PW->MAC1, PW->MAC2 can always last as long as the lifespan of the PW. In other words, when a first node of a PW is provisioned, an address request packet will be broadcast from each port of the first node associated with the PW, regardless of the state of the currently stored PW-MAC records (which represented a previous PW). In this way, the complexities associated with ARP cache time-outs for IP records are eliminated.

Further descriptions and examples of the procedures for PW provisioning, protocol procedures, and extensions to ARP are provided below, wherein these descriptions all assume that a PW node supports multiple Ethernet ports and where each of them associates with one MAC address. It will be appreciated that the present invention is not limited to the use of PW peers with multiple ports that associate with a single MAC address.

In various embodiments of the present invention, to provision a PW, a PW instance is created at each end with a unique local PW ID and target PW ID. A local PW instance binds with a set of one or more available physical ports, and optional VLAN where each of the ports attaches.

A PW instance maintains a list of local MAC addresses and corresponding optional VLAN ID that it can utilize to reach the target PW peer. Any local physical port can be assigned to serve any PW, independent of the local PW configuration, the local port assignment to the PW, the remote PW peer configuration, and PW peer and remote physical port assignment. A mapping of target PW ID to a list of target MAC addresses and corresponding optional VLAN IDs, when any is available, is also maintained.

Some PW peer address discovery procedures in accordance with the present invention resolve the MAC address(es) where the target PW peer is located utilizing extended ARP request and response packets. When the address discovery procedure is initiated, a request is broadcast in the domain of an Ethernet LAN or VLAN. Upon the receipt of one or more responses, a primary MAC address of the PW peer can be determined. When a physical port is assigned to serve a PW, an ARP Request shall be broadcast from that physical port, with the request packet containing the local PW ID (in the field specified for the sender's protocol address) and remote PW ID (in the field specified for the target's protocol address). Each available port allocated to serve the target PW instance independently responds to the ARP request with its local MAC address for the PW.

An illustrative process for determining the active/backup role of these ports is described below. More particularly, there will be only one active port for one PW instance, the other ports at the target end (i.e., target node), if any, are designated as backup ports. The active port of each side of the PW is responsible for sending and receiving the payload traffic for the served PW. An active port will send to the active port at the far end peer but may receive from both active and backup ports from the peer at the opposite end of the PW. For a PW ID that is an even value, the port with the lowest MAC address is designated to be the primary and the other ports associated with that MAC address are designated to be backup. For a PW ID that is an odd value, the port with the highest MAC address is designated to be the primary, and the other ports associated with that MAC address are designated to be backup. In this way, protection may be configured on one side of the PW, independently from the other side. For example, when a peer receives more than one response during the peer address discovery process, that peer chooses one of the received MAC address as the active one among the several responses, and stores others as backup, or alternate, MAC addresses to reach the far end peer. When a failure to reach the primary address for the PW is detected, the originating end of the PW switches to one of the backup, or alternate, MAC addresses for the far end of the PW. It will be appreciated that within the scope of the present invention, alternative rules may be used for selecting which ports are active and which ports are backups.

Table 1, shown below, summarizes the fields of a modified ARP packet suitable for use in the present invention. It is noted that, with respect to the value for a protocol type, specific values are typically allocated by IANA subsequent to a registration submission. However, the present invention, is not limited to any particular values for the protocol type. More generally, the present invention is not limited to any particular numbers or values, but rather these illustrative numbers and values represent the described information. By way of example, and not limitation, the hardware address length may be represented by any bit sequence, or other signalling scheme, as long as the receiving entity comprehends the meaning of the communicated information.

**Table 1 ARP Message Fields**

| Field Name | Value | Notes |
|---|---|---|
| Hardware type | 0x00-01 | Indicates Ethernet-based network |
| Protocol type | xxxx | Indicates PW application |
| Hardware address length in bytes | 0x06 | Indicates 6 bytes of MAC address |
| Protocol address length in bytes | 0x04 | Indicates 4 bytes of PW ID |
| Operation code | 1) 0x00-01 | 1) ARP Request |
| | 2) 0x00-02 | 2) ARP Response |
| Hardware address of sender | MAC address of sending PW peer port | |
| Protocol address of sender | PW ID of sending PW peer | |
| Hardware address of target | 1) 0 | 1) ARP Request |
| | 2) MAC address of the receiver of this packet | 2) ARP Response |
| Protocol address of target | PW ID of receiving PW peer. | |

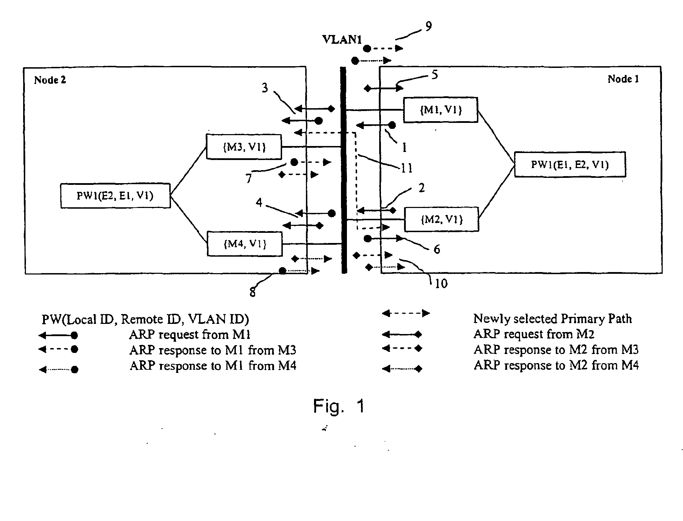

Referring to Fig. 1, an illustrative method in accordance with the present invention is described. In a first set of operations, PW1 is provisioned at Node 1 with local PW ID E1 and target PW ID E2, with attachments to VLAN V1 via MAC addresses M1 and M2. For convenience, this information may be denoted in a format such as: PWn(Local ID, Remote ID, VLAN ID). Subsequently, PW1 is provisioned at Node 2 with local PW ID E2 and target PW ID E1, with attachments to VLAN V1 via MAC addresses M3 and M4. At a node for a PW, two PW IDs are required and provisioned, i.e., the local PW ID to identify itself, and a remote PW ID to indicate the peer to reach.

When PW1 is provisioned in Node 1, if any peer MAC address needed to reach the PW endpoint E2 is unknown (e.g., M3, M4 or both), then the PW instance of Node 1 initiates the broadcast of an extended ARP request containing at least the target PW ID E2, the source MAC address, and source PW ID E1. As shown in Fig. 1, Node 1 includes MAC addresses M1 and M2. In view of this configuration, there is an extended ARP request broadcast packet associated with M1 (1), and an extended ARP request broadcast packet associated with M2 (2). That is, each of ports M1 and M2 broadcast an address request packet.

Still referring to Fig. 1, it can be seen that the extended ARP request packets broadcast from M1 and M2 reach all attachments (3, 4), other than themselves, in the VLAN V1 domain in any order. ARP requests for the broadcasting PW instance at the same end are identified and dropped (5, 6).

If PW1 has been provisioned at the time the request is processed, a successful ARP response to each request from M1 and M2 is returned by M3 (7); otherwise no response is returned. With receipt of the broadcast extended ARP request, PW1 at Node 2 learns that the far end MAC addresses are M1 and M2, for PW endpoint E1 (11). Additionally, if PW1 has been provisioned at the time that the request is processed, a successful ARP response to each request from M1 and M2 is returned by M4 (8); otherwise no response is returned. With receipt of the broadcast extended ARP request, PW1 at Node 2 learns that the far end MAC addresses are M1 and M2, for PW endpoint E1. In other words, M3 receives a broadcast request from each of M1 and M2, and responds to each of M1 and M2; and M4 receives a broadcast request from each of M1 and M2, and responds to each of M1 and M2.

The responses from M3 and M4 arrive at M1 (9) in any order. Similarly, the responses from M3 and M4 arrive at M2 (10) in any order. The initiating end may wait for a predetermined period of time in order to receive all responses before it performs the process of selecting a primary path. In the illustrative embodiment of Fig. 1, E1 is an odd number, E2 is an even number, M1 < M2, and M3 < M4; and therefore the primary path selected for PW1 at Node 1 is from M2 to M3, as shown by the dotted line with an arrowhead at each end. When PW1 is provisioned at Node 2, the peer address has already been resolved. The primary path for PW1 at Node 2 is from M3 to M2 (11).

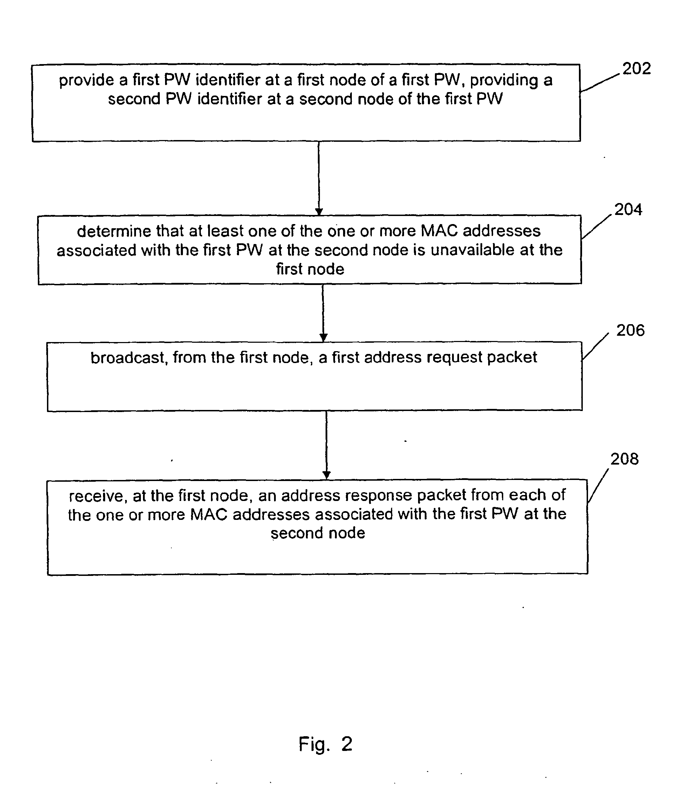

Referring to Fig. 2, an illustrative method of PW peer address discovery is shown. More particularly, a method of address discovery over Ethernet for a Pseudo-Wire (PW) emulation, includes providing 202 a first PW identifier at a first node of a first PW, and a second PW identifier at a second node of the first PW. These PW identifiers are unique within a single broadcasting domain of either physical or virtual local area networks. After providing the PW identifiers, it is determined 204 that at least one of the one or more MAC addresses associated with the first PW at the second node is unavailable at the first node. A first address request packet is then broadcast 206 from the first node. The illustrative method of Fig. 2 further includes receiving 208, at the first node, an address response packet from each of the one or more MAC addresses associated with the first PW at the second node. In this way, all the physical addresses needed to reach the far end of the PW are now available at the first end of the PW.

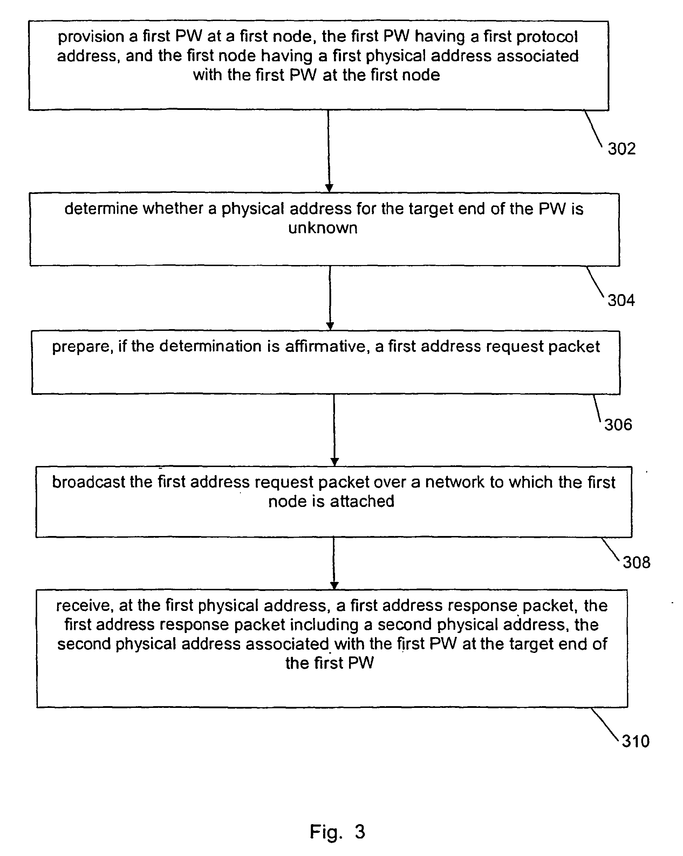

Referring to Fig. 3, another illustrative embodiment of the present invention provides a method of obtaining a physical address for a target end of a pseudo-wire, and includes comprising provisioning 302 a first PW at a first node, the first PW having a first protocol address, and the first node having a first physical address associated with the first PW at the first node. It is then determined 304 whether a physical address for the target end of the PW is unknown. If it is determined that there is missing physical, or hardware, address information, a first address request packet is prepared 306. Once the first address request packet is prepared the method continues by broadcasting 308 the first address request packet over a network to which the first node is attached. Additionally, a first address response packet is received 310 at the first physical address, and the first address response packet includes a second physical address, which is associated with the first PW at the target end of the first PW.

### Conclusion

Various embodiments of the present invention provide methods for obtaining pseudo-wire peer address information for properly establishing communication over a pseudo-wire link.

An advantage of some embodiments of the present invention is that use of the natural characteristics of broadcasting in Ethernet or VLAN environments reduces the complexity of implementation.

A further advantage of some embodiments of the present invention is that an external control protocol is not required to perform the establishment, and therefore fewer operational procedures are needed.

A still further advantage of some embodiments of the present invention is that at least a portion of the information exchanged during the establishment process can also be used for redundancy, thereby improving overall system reliability.

Various aspects of the present invention may be implemented as circuit-based solutions, including possible implementation on a single integrated circuit. As would be apparent to one skilled in the art, various functions of circuit elements may also be implemented as processing operations in a software program. Such software may be employed in, for example, a digital signal processor, micro-controller, or general-purpose computer. That is, the present invention may be implemented as an apparatus having the required computational resources, memory resources, and communication resources, to perform the functions described herein for PW peer address discovery in an Ethernet-based network. Such an apparatus may be referred to as a network node.

The present invention can be embodied in the form of methods as well as apparatuses for practicing those methods. The present invention can also be embodied in the form of program code embodied in tangible media, such as punched cards, magnetic tape, floppy disks, hard disk drives, CD-ROMs, DVDs, flash memory cards, or any other machine-readable storage medium, wherein, when the program code is loaded into and executed by a machine, such as a computer, the machine becomes an apparatus for practicing the invention. The present invention can also be embodied in the form of program code, for example, whether stored in a storage medium, loaded into and/or executed by a machine, or transmitted over some transmission medium or carrier, such as over electrical wiring or cabling, through fiber optics, or via electromagnetic radiation, wherein, when the program code is loaded into and executed by a machine, such as a computer, the machine becomes an apparatus for practicing the invention. When implemented on a general-purpose processor, the program code segments combine with the processor to provide a unique device that operates analogously to specific logic circuits.

It is to be understood that the present invention is not limited to the embodiments described above, but encompasses any and all embodiments within the scope of the subjoined Claims and their equivalents.

## Claims

1. A method of address discovery over Ethernet for a Pseudo-Wire (PW) emulation, comprising:
providing (202) a first PW identifier at a first node of a first PW, providing a second PW identifier at a second node of the first PW;
determining (204) that at least one of the one or more MAC addresses associated with the first PW at the second node is unavailable at the first node;
broadcasting (206), from the first node, a first address request packet (1) comprising one or more source MAC addresses and a first PW identifier associated with the first PW at the first node and the second PW identifier associated with the first PW at the second node; and
receiving (206), at the first node, an address response packet (9, 10) from each of the one or more MAC addresses associated with the first PW at the second node.

2. The method of Claim 1, further comprising designating one of the one or more MAC addresses associated with the first PW at the second node as the primary address.

3. The method of Claim 2, wherein designation of the primary address comprises:
determining that the second PW identifier is even, and designating the MAC address having the smallest value as the primary address.

4. The method of Claim 2, wherein designation of the primary address comprises:
determining that the second PW identifier is odd, and designating the MAC address having the highest value as the primary address.

5. The method of Claim 1, wherein the first address request packet (1), identifies a first MAC address associated with the first PW at the first node; and further comprising broadcasting from the first node a second address request packet (2), the second address request packet (2) identifying a second MAC address associated with the first PW at the first node.

## Patentansprüche

1. Verfahren zur Adressenauffindung über Ethernet für eine Pseudo-Wire- bzw. PW-Emulation, mit den folgenden Schritten:
Bereitstellen (202) einer ersten PW-Kennung an einem ersten Knoten einer ersten PW, Bereitstellen einer zweiten PW-Kennung an einem zweiten Knoten der ersten PW;
Bestimmen (204), daß mindestens eine der einen oder mehreren MAC-Adressen, die mit der ersten PW an dem zweiten Knoten assoziiert sind, an dem ersten Knoten nicht verfügbar ist;
Rundsenden (206) eines ersten Adressenanforderungspakets (1), das eine oder mehrere Quellen-MAC-Adressen und eine erste PW-Kennung, die mit der ersten PW an dem ersten Knoten assoziiert ist, und die zweite PW-Kennung, die mit der ersten PW an dem zweiten Knoten assoziiert ist, umfaßt, von dem ersten Knoten; und
Empfangen (206) eines Adressenantwortpakets (9, 10) von jeder der einen oder mehreren MAC-Adressen, die mit der ersten PW an dem zweiten Knoten assoziiert sind, an dem ersten Knoten.

2. Verfahren nach Anspruch 1, ferner mit dem Schritt des Designierens einer der einen oder mehreren MAC-Adressen, die mit der ersten PW an dem zweiten Knoten assoziiert sind, als die primäre Adresse.

3. Verfahren nach Anspruch 2, wobei das Designieren der primären Adresse folgendes umfaßt:
Bestimmen, daß die zweite PW-Kennung gerade ist, und Designieren der MAC-Adresse mit dem kleinsten Wert als die primäre Adresse.

4. Verfahren nach Anspruch 2, wobei das Designieren der primären Adresse folgendes umfaßt:
Bestimmen, daß die zweite PW-Kennung ungerade ist, und Designieren der MAC-Adresse mit dem höchsten Wert als die primäre Adresse.

5. Verfahren nach Anspruch 1, wobei das erste Adressenanforderungspaket (1) eine erste MAC-Adresse identifiziert, die mit der ersten PW an dem ersten Knoten assoziiert ist; und ferner umfassend das Rundsenden eines zweiten Adressenanforderungspakets (2) von dem ersten Knoten, wobei das zweite Adressenanforderungspaket (2) eine zweite MAC-Adresse identifiziert, die mit der ersten PW an dem ersten Knoten assoziiert ist.

## Revendications

1. Procédé de découverte d'adresse sur Ethernet pour une émulation pseudo-filaire (PW), comprenant:
la fourniture (202) d'un premier identifiant PW au niveau d'un premier noeud d'une première PW, la fourniture d'un second identifiant PW au niveau d'un second noeud de la première PW;
la détermination (204) qu'au moins une parmi l'une ou plusieurs adresses MAC associées à la première PW au niveau du second noeud est indisponible au niveau du premier noeud ;
la diffusion (206), depuis le premier noeud, d'un premier paquet de demande d'adresse (1) comprenant une ou plusieurs adresses MAC sources et un premier identifiant PW associé à la première PW au niveau du premier noeud et le second identifiant PW associé à la première PW au niveau du second noeud ; et
la réception (206), au niveau du premier noeud, d'un paquet de réponse d'adresse (9, 10) provenant de chacune parmi l'une ou plusieurs adresses MAC associées à la première PW au niveau du second noeud.

2. Procédé selon la revendication 1, comprenant en outre la désignation d'une parmi l'une ou plusieurs adresses MAC associées à la première PW au niveau du second noeud en tant que l'adresse primaire.

3. Procédé selon la revendication 2, dans lequel une désignation de l'adresse primaire comprend :
la détermination que le second identifiant PW est pair, et la désignation de l'adresse MAC ayant la valeur la plus faible en tant que l'adresse primaire.

4. Procédé selon la revendication 2, dans lequel une désignation de l'adresse primaire comprend :
la détermination que le second identifiant PW est impair, et la désignation de l'adresse MAC ayant la valeur la plus forte en tant que l'adresse primaire.

5. Procédé selon la revendication 1, dans lequel le premier paquet de demande d'adresse (1) identifie une première adresse MAC associée à la première PW au niveau du premier noeud ; et comprenant en outre la diffusion depuis le premier noeud d'un second paquet de demande d'adresse (2), le second paquet de demande d'adresse (2) identifiant une seconde adresse MAC associée à la première PW au niveau du premier noeud.
